# FASCICULE DE BREVET EUROPEEN

(11) **EP 2 807 041 B1**
(45) Date de publication et mention de la délivrance du brevet: **29.06.2016**
(21) Numéro de dépôt: 13706578.5
(22) Date de dépôt: 28.01.2013
(51) Int. Cl.: B60C 7/12, B60C 15/024, B65F 1/14

(54) **BANDAGE DE ROUE ET ROUE POUR BAC DE COLLECTE DE DECHETS**
REIFEN UND RAD FÜR EINEN ABFALLSAMMELBEHÄLTER
TYRE AND WHEEL FOR A WASTE COLLECTION BIN

(30) Priorité: 26.01.2012 FR 1250774
(43) Date de publication de la demande: 03.12.2014
(73) Titulaire: Compagnie Plastic Omnium, 69007 Lyon (FR)
(72) Inventeur: OLLIER, Fabrice, 01700 Miribel (FR); VAN-DEMEULEBROUCKE, Cédric, 32049 Herford (DE)
(74) Mandataire: Andrieux, Benoît
(86) Numéro de dépôt international: PCT/FR2013/050167
(87) Numéro de publication internationale: WO 2013/110904

(56) Documents cités:
- EP-A2- 1 522 427
- DE-C- 855 810
- DE-U1- 9 303 111
- US-A- 1 552 081
- US-A- 1 927 801
- US-A- 3 203 461

## Description

La présente invention se rapporte au domaine des bacs de collecte de déchets munis de roues. Ces bacs de collecte comportent généralement une cuve en matière plastique, éventuellement munie d'un couvercle pivotant, au bas de laquelle sont montées des roues, en général grâce à l'adjonction d'un essieu.

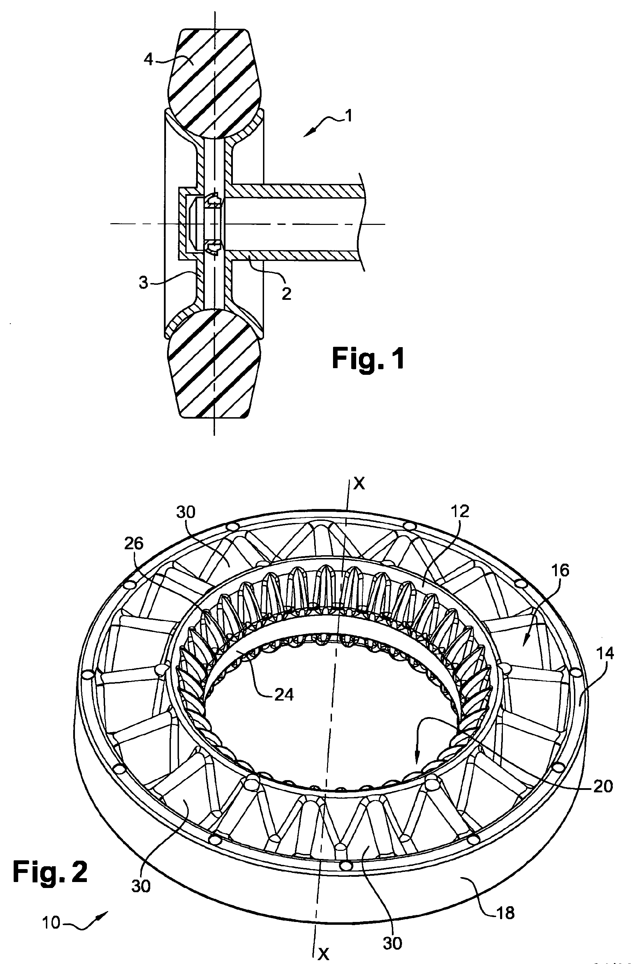

Parmi les bacs de collecte équipés de roues, on distingue deux grandes catégories : les bacs à deux roues et les bacs à quatre roues. La constitution des roues est en général identique sur les deux types de bacs. Comme montré sur la figure 1, une roue 1 comporte en général un moyeu 2 en matière plastique, destiné à être monté sur un essieu ou un axe, le moyeu 1 étant solidaire d'un voile formant une jante 3 sur laquelle est monté un bandage 4. La surface périphérique du bandage, généralement réalisée à partir de caoutchouc (éventuellement recyclé) forme la bande de roulement de la roue. D'autres bandages sont connus des documents DE855810C et US-A-1927801.

Les bacs de collecte, en particulier ceux comportant deux roues, sont quotidiennement déplacés et manipulés lors des opérations de collecte. Leur déplacement sur les trottoirs et la chaussée (et en particulier, le cas échéant, la descente du trottoir vers la chaussée) occasionnent chocs et vibrations qui sont responsables d'un caractère bruyant du bac. Cet aspect bruyant des bacs à roues est renforcé par le fait que, pour assurer une robustesse et une longévité suffisante aux roues, le bandage est généralement un élément massif et épais, ce qui le rend très peu déformable, même lorsqu'il est réalisé dans un matériau à base de caoutchouc. Le bandage est donc peu amortissant et transmet à la cuve du bac, sans les amortir ou presque, les chocs et vibrations qu'il subit, par l'intermédiaire de la jante et du moyeu qui sont généralement très rigides. En plus de l'aspect bruyant, la transmission quasi-intégrale à la jante et au moyeu des vibrations et chocs reçus par le bandage peut également mener à la destruction de ces derniers, en cas de sollicitations extrêmes et/ou répétées.

Diverses solutions ont été proposées dans le but de réduire les bruits de roulage d'un bac de collecte, en améliorant la constitution des bandages de roue. Par exemple, il a été proposé de munir le bandage de stries conférant un caractère partiellement souple à la surface externe du bandage, permettant d'obtenir un effet amortissant. Cette solution s'est toutefois révélée d'une efficacité réduite.

La présente invention a pour objet de pallier les inconvénients des solutions existantes, en proposant un bandage de roue et une roue pour bac de collecte permettant de réduire drastiquement la génération de bruit lors du roulage, mais également de réduire le poids d'une telle roue, ainsi que la quantité de matière nécessaire à sa fabrication.

A cet effet, l'invention concerne un bandage de roue, tel que défini dans la revendication 1, destiné à être monté sur une jante de roue d'un bac de collecte de déchets, ledit bandage étant de forme générale annulaire et comportant :
- une ceinture externe dont une surface externe forme une surface de roulement ;
- une ceinture interne portant une surface de contact avec la jante ;
la surface de contact étant formée par la surface enveloppant les sommets d'une pluralité de nervures s'étendant radialement en saillie depuis la ceinture interne du bandage.

La ceinture interne porte une âme centrale, s'étendant radialement en saillie depuis la ceinture, et à laquelle les nervures sont reliées.

Dans une réalisation, les nervures sont disposées de part et d'autre de l'âme centrale.

Dans une réalisation, les nervures opposées, situées de part et d'autre de l'âme centrale, se font face deux à deux.

Dans une réalisation, les nervures opposées, situées de part et d'autre de la nervure centrale sont interdigitées.

Dans une réalisation, la surface radialement interne de l'âme n'est pas confondue avec la surface de contact.

Dans une réalisation, la ceinture externe et la ceinture interne sont reliées l'une à l'autre par une partie intermédiaire comportant une pluralité de nervures.

Dans une réalisation, les nervures sont reliées entre elles de sorte qu'elles forment une partie intermédiaire monobloc.

Dans une réalisation, la partie intermédiaire présente une forme générale de sinus.

Dans une réalisation, le bandage conforme à l'invention est obtenu par moulage, notamment par moulage d'un matériau issu de la récupération des résidus de broyage de pneumatique.

L'invention concerne également une roue de bac de collecte de déchets, comportant un moyeu solidaire d'une jante et un bandage de roue tel que défini ci-dessus.

Dans une réalisation, le bandage de roue est monté serré sur la jante.

L'invention sera mieux comprise à la lecture de la description qui va suivre, donnée uniquement à titre d'exemple et réalisée en se référant aux figures annexées parmi lesquelles :
- la figure 1, décrite plus haut, représente une vue en coupe d'une roue de type conventionnel ;
- la figure 2 est une vue en perspective d'un bandage de roue conforme à l'invention ;
- la figure 3 est une demi-vue de côté du bandage de roue de la figure 1 ;
- la figure 4 est une coupe brisée à plans sécants AA du bandage de roue de la figure 3.

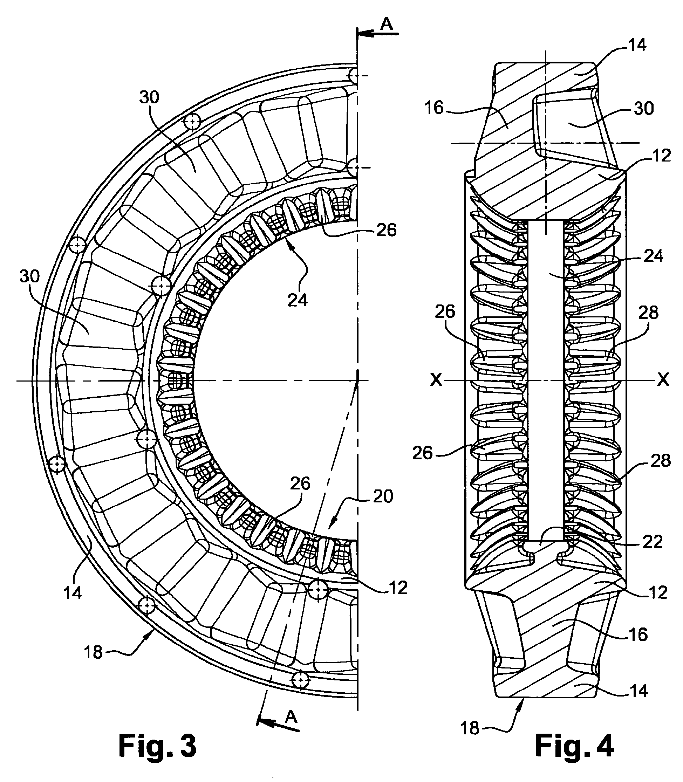

Les figures 2 à 4 représentent un bandage conforme à l'invention, obtenu en une pièce par moulage. Le bandage de roue 10 a une forme générale annulaire d'axe XX. Le bandage 10 comporte une ceinture radialement interne 12 et une ceinture radialement externe 14, reliées entre elle par une partie intermédiaire 16. Le bandage de roue 10 est prévu pour être monté par serrage élastique sur une roue de bac de collecte de déchets.

La ceinture externe 14 comporte une surface radialement externe qui forme la surface de roulement 18 du bandage 10. Dans l'exemple des figures 2 à 4, le profil de la surface de roulement 18 est plat, mais tout autre type de profil peut bien entendu être envisagé (profil convexe, présence de stries et/ou de sculptures, etc.)

La ceinture interne 12 est destinée à être serrée, par déformation élastique, sur la surface externe d'une jante. La ceinture interne 12 porte à cet effet une surface radialement interne qui forme, lorsque le bandage est monté sur une jante, une surface de contact 20 avec cette dernière. La surface de contact 20 est donc adaptée pour coopérer avec le profil de la jante prévue pour porter le bandage de roue. Dans l'exemple, le bandage des figures 2 à 4 est destiné à être monté sur une jante présentant sur sa partie radialement externe un profil circulaire concave, par exemple sensiblement analogue au profil de la jante de la figure 1.

La ceinture interne 12 et la ceinture externe 14 sont solidaires l'une de l'autre, étant reliées par la partie intermédiaire 16, cette partie pouvant être massive ou comme détaillé plus bas, formée par une structure allégée telle qu'un réseau de nervures.

La surface de contact 20 de la ceinture interne 12 est formée par au moins une portion des crêtes d'une pluralité de nervures 26, 28 disposées de part et d'autre d'une âme centrale 22. L'âme centrale 22 et les nervures 26, 28 s'étendent radialement par rapport à l'axe XX du bandage 10, en saillie depuis la ceinture interne 12. Les nervures 26, 28 sont réparties de façon uniforme autour de l'axe XX, étant espacées les une des autres d'un intervalle angulaire constant. En outre, celles-ci s'étendent selon une direction axiale (parallèle à l'axe XX) depuis la surface interne 24 de l'âme centrale 22, à laquelle chaque nervure 26, 28 est reliée. Les nervures sont en outre disposées de telle sorte que leur plus grande dimension est orientée selon une direction parallèle à l'axe XX. Dans l'exemple des figures 2 à 4, les nervures 26, 28 se font face deux à deux, mais il est peut être préféré que les nervures soient décalées, et notamment interdigitées. Un nombre de nervures différent de part et d'autre de l'âme centrale peut également être préféré.

Afin de présenter le profil voulu pour s'adapter à la jante, la hauteur des nervures 26, 28 est décroissante selon la direction axiale, depuis l'âme centrale vers chaque bord respectif de la ceinture interne 12. Dans l'exemple, la portion de crête de chacune des nervures qui est contenue dans la surface de contact 20 présente un profil circulaire. En outre, en vue de la réalisation du bandage par moulage, chaque nervure présente une section décroissante de la base vers le sommet (par exemple une section sensiblement triangulaire ou trapézoïdale), ce qui facilite l'opération de démoulage.

La surface radialement interne 24 de l'âme centrale 22 est dans l'exemple de profil plat. Ainsi, cette surface interne 24 ne participe pas au contact entre le bandage 10 et la surface extérieure de la jante. Ce profil plat constitue ici un dégagement par rapport à un profil circulaire entier, ce qui facilite l'ajustement du bandage de roue 10 sur la jante, celui-ci étant monté faiblement serré. En variante, d'autres profils peuvent être préférés pour la surface interne de l'âme 22.

La structure formée par l'âme centrale 22 et les nervures 26, 28, de par sa nature évidée en comparaison avec les structures massives connues, permet de conférer au bandage 10 une meilleure souplesse au niveau du contact avec la jante. Ainsi, le bandage est en mesure de se déformer et d'absorber une grande partie des chocs et vibrations qu'il subit au lieu de les transmettre quasi-intégralement à la jante et au moyeu. En outre, la réalisation non pleine de la partie interne du bandage le rend plus léger, pour une résistance mécanique équivalente aux bandages pleins connus.

La qualité d'amorti du bandage peut être encore renforcée par une constitution adaptée de la partie intermédiaire 16, qui solidarise la ceinture interne 12 et la ceinture externe 14. Dans l'exemple des figures 2 à 4, cette partie intermédiaire 16 comporte une pluralité de nervures 30 joignant la ceinture externe 14 à la ceinture interne 12. Dans une réalisation avantageuse, les nervures consécutives sont reliées deux à deux, formant ainsi une structure nervurée unique, dans l'exemple en forme générale de sinus ou de vagues. Ainsi, la partie intermédiaire présente une forme générale en vagues dont les crêtes et les creux sont situés de part et d'autre du plan radial médian du bandage (plan perpendiculaire à l'axe XX). Cette structure présente l'avantage d'être très performante en termes d'amorti et d'être particulièrement légère, tout en présentant la résistance mécanique requise.

Le bandage de roue conforme à l'invention présente l'avantage de constituer une structure légère, résistante et présentant les qualités de déformation et d'amorti souhaitées. Il est en outre parfaitement adapté à une fabrication pour moulage, en une pièce unique. Avantageusement, le bandage conforme à l'invention peut être moulé à partir d'un matériau de récupération, tel qu'un matériau issu du recyclage de résidus de broyage de pneumatiques usagés (comme par exemple le matériau connu sous l'appellation de « poudrette »).

Si l'on souhaite fabriquer le bandage de roue conforme à l'invention en partant d'un matériau tel que la poudrette, il convient de prendre en compte l'aspect partiellement granuleux que conserve dans certains cas ce type de matériau après moulage. En particulier, l'épaisseur des différentes nervures dont est pourvu le bandage sera prévue pour être supérieure à la taille maximale des grains contenus dans le matériau après transformation.

Le bandage de roue conforme à l'invention permet donc, ainsi qu'exposé plus haut, d'obtenir un meilleur amorti des chocs, une meilleure absorption des vibrations que le bandage de roue connus, favorisant ainsi la longévité des roues pourvus de ce bandage, tout en permettant de diminuer les nuisances sonores générées par les bacs de collecte. Le moyeu pourvu d'un bandage de roue conforme à l'invention subit des sollicitations moins importantes, ce qui permet d'allonger la durée de vie du moyeu. Le bandage lui-même est mieux préservé dans le temps, grâce à sa capacité à absorber une partie des chocs et vibrations qu'il subit. En outre, la structure du bandage conforme à l'invention permet un gain de poids significatif et une diminution importante de la quantité de matière nécessaire à sa fabrication. Enfin, le bandage de roue conforme à l'invention est particulièrement adapté à une fabrication par moulage, notamment par moulage d'un matériau issu de la récupération de résidus de broyage de pneumatiques usagés.

## Revendications

1. Bandage de roue destiné à être monté sur une jante de roue d'un bac de collecte de déchets, ledit bandage (10) étant de forme générale annulaire et comportant :
- une ceinture externe (14) dont une surface externe forme une surface de roulement (18) ;
- une ceinture interne (12) portant une surface de contact avec la jante (20) ; la surface de contact (20) étant formée par la surface enveloppant les sommets d'une pluralité de nervures (26, 28) s'étendant radialement en saillie depuis la ceinture interne (12) du bandage (10), la pluralité de nervure (25, 28) étant reliées à une âme centrale (22) s'étendant radialement en saillie depuis la ceinture interne (12).

2. Bandage selon la revendication 1, dans lequel les nervures (26, 28) sont disposées de part et d'autre de l'âme centrale (22).

3. Bandage selon la revendication 2, dans laquelle les nervures opposées, situées de part et d'autre de l'âme centrale (22), se font face deux à deux.

4. Bandage selon la revendication 2, dans laquelle les nervures opposées, situées de part et d'autre de la nervure centrale (22) sont interdigitées.

5. Bandage selon l'une des revendications 1 à 4, dans laquelle la surface radialement interne (24) de l'âme (22) n'est pas confondue avec la surface de contact (20).

6. Bandage selon l'une des revendications précédentes, dans lequel la ceinture externe (14) et la ceinture interne (12) sont reliées l'une à l'autre par une partie intermédiaire (16) comportant une pluralité de nervures (30).

7. Bandage selon la revendication précédente, dans lequel les nervures (30) sont reliées entre elles de sorte qu'elles forment une partie intermédiaire (16) monobloc.

8. Bandage selon la revendication précédente, dans lequel la partie intermédiaire (16) présente une forme générale de sinus.

9. Bandage selon l'une des revendications 1 à 8, **caractérisé en ce qu'**il est obtenu par moulage, notamment par moulage d'un matériau issu de la récupération des résidus de broyage de pneumatique.

10. Roue de bac de collecte de déchets, comportant un moyeu solidaire d'une jante et un bandage de roue conforme à l'une des revendications 1 à 9.

11. Roue selon la revendication 10, dans laquelle le bandage de roue est monté serré sur la jante.

## Patentansprüche

1. Radreifen zur Montage auf einer Radfelge eines Behälters zum Sammeln von Abfällen, wobei der Reifen (10) allgemein ringförmig ist und Folgendes aufweist:
- einen außen liegenden Gürtel (14), von dem eine Außenfläche eine Lauffläche (18) bildet;
- einen innen liegenden Gürtel (12), der eine Kontaktfläche mit der Felge (20) trägt,
wobei die Kontaktfläche (20) durch die Fläche gebildet ist, welche die Spitzen einer Vielzahl von Rippen (26, 28) umhüllt, die sich von dem innen liegenden Gürtel (12) des Reifens (10) radial vorspringend erstrecken, wobei die Vielzahl von Rippen (26, 28) mit einem mittleren Kern (22) verbunden sind, der sich von dem innen liegenden Gürtel (12) radial vorspringend erstreckt.

2. Radreifen nach Anspruch 1, wobei die Rippen (26, 28) beiderseits des mittleren Kerns (22) angeordnet sind.

3. Radreifen nach Anspruch 2, wobei die entgegengesetzten Rippen, die sich beiderseits des mittleren Kerns (22) befinden, sich paarweise gegenüberliegen.

4. Radreifen nach Anspruch 2, wobei die entgegengesetzten Rippen, die sich beiderseits des mittleren Kerns (22) befinden, interdigital sind.

5. Radreifen nach einem der Ansprüche 1 bis 4, wobei die radial innen liegende Fläche (24) des Kerns (22) nicht mit der Kontaktfläche (20) zusammenfällt.

6. Radreifen nach einem der vorhergehenden Ansprüche, bei dem der außen liegende Gürtel (14) und der innen liegende Gürtel (12) durch einen Zwischenteil (16) miteinander verbunden sind, der eine Vielzahl von Rippen (30) aufweist.

7. Radreifen nach dem vorhergehenden Anspruch, wobei die Rippen (30) miteinander so verbunden sind, dass sie einen einstückigen Zwischenteil (16) bilden.

8. Radreifen nach dem vorhergehenden Anspruch, wobei der Zwischenteil (16) eine allgemeine Sinusform aufweist.

9. Radreifen nach einem der Ansprüche 1 bis 8, **dadurch gekennzeichnet, dass** er durch Formen, insbesondere durch Formen eines Materials, das aus der Rückgewinnung der Reifenzerkleinerungsrückstände hervorgegangen ist, erhalten wird.

10. Rad für einen Behälter zum Sammeln von Abfällen, aufweisend eine Nabe, die fest mit einer Felge verbunden ist, und einen Radreifen nach einem der Ansprüche 1 bis 9.

11. Rad nach Anspruch 10, wobei der Radreifen auf der Felge aufgespannt montiert ist.

## Claims

1. Tyre intended to be mounted on a wheel rim of a waste collection bin, said tyre (10) being of generally annular shape and comprising:
- an outer belt (14) having an outer surface forming a running surface (18);
- an inner belt (12) carrying a contact surface with the rim (20);
the contact surface (20) being formed by the surface enveloping the vertices of a plurality of ribs (26, 28) projecting radially from the inner belt (12) of the tyre (10), the plurality of ribs (26, 28) being connected to a central core (22) projecting radially from the inner belt (12).

2. Tyre according to claim 1, wherein the ribs (26, 28) are arranged on either side of the central core (22).

3. Tyre according to claim 2, wherein the opposite ribs located on either side of the central core (22), face each other two by two.

4. Tyre according to claim 2, wherein the opposite ribs located on either side of the central rib (22) are interdigitated.

5. Tyre according to one of claims 1 to 4, wherein the radially inner surface (24) of the core (22) is not coincident with the contact surface (20).

6. Tyre according to one of the preceding claims, wherein the outer belt (14) and the inner belt (12) are connected to each another by an intermediate section (16) having a plurality of ribs (30).

7. Tyre according to the preceding claim, wherein the ribs (30) are connected to each other so as to form an intermediate monobloc part (16).

8. Tyre according to the preceding claim, wherein the intermediate part (16) has a generally sinusoidal shape.

9. Tyre according to one of claims 1 to 8, **characterised in that** it is obtained by moulding, in particular by moulding a material derived from the recovery of ground tyre residues.

10. Waste collection bin wheel, comprising a hub secured to a rim and a tyre according to one of claims 1 to 9.

11. Wheel according to claim 10, wherein the tyre is mounted tightly on the rim.
